# EUROPÄISCHE PATENTANMELDUNG

(11) **EP 3 699 866 A1**
(43) Veröffentlichungstag der Anmeldung: **26.08.2020**
(21) Anmeldenummer: 20156343.4
(22) Anmeldetag: 10.02.2020
(51) Int. Cl.: G06T 7/70, B60R 21/015

(54) **VERFAHREN, STEUERGERÄT UND COMPUTERPROGRAMMPRODUKT ZUM BESTIMMEN EINER KOPFORIENTIERUNG UND/ODER -POSITION EINES FAHRZEUGINSASSEN**

(30) Priorität: 20.02.2019 DE 102019202302
(71) Anmelder: ZF Friedrichshafen AG, 88046 Friedrichshafen (DE)
(72) Erfinder: Angermayer, Jörg, 88046 Friedrichshafen (DE)
(74) Vertreter: ZF Friedrichshafen AG

(57) **Zusammenfassung**

Verfahren zum Bestimmen einer Kopforientierung (K1, K2) und/oder -position eines Fahrzeuginsassen (1) umfassend die Schritte: Bestimmen eines ersten Erfassungsbereichs (E1) für Kopforientierungen (K1, K2) und/oder -positionen eines ersten in einem Innenraum (2) des Fahrzeuges angeordneten bildgebenden Sensors (S1) in Abhängigkeit von verschiedenen Kopforientierungen (K1, K2) und/oder -positionen relativ zu der Anordnung des ersten Sensors (S1) (V1), Bestimmen eines zweiten Erfassungsbereichs (E2) für Kopforientierungen (K1, K2) und/oder -positionen wenigstens eines zweiten in dem Innenraum (2) des Fahrzeuges angeordneten bildgebenden Sensors (S2) in Abhängigkeit von verschiedenen Kopforientierungen (K1, K2) und/oder -positionen relativ zu der Anordnung des zweiten Sensors (S2) (V2) und in Abhängigkeit der Kopforientierung (K1, K2) und/oder -position des Fahrzeuginsassen (1) Bestimmen der Kopforientierung (K1, K2) und/oder -position mit demjenigen Sensor (S1, S2), in dessen Erfassungsbereich (E1, E2) die Kopforientierung (K1, K2) und/oder -position besser bestimmbar ist als in einem Erfassungsbereich (E1, E2) eines anderen Sensors (S1, S2) (V3). Ferner bezieht sich die Erfindung auf Steuergerät (10) für automatisierte Fahrfunktionen, ein Innenraumüberwachungssystem (20) eines Fahrzeuges, ein Computerprogrammprodukt zum Bestimmen einer Kopforientierung (K1, K2) und/oder -position eines Fahrzeuginsassen (1) und einen Computerlesbarer Datenträger.

## Beschreibung

Die Erfindung bezieht sich auf ein Verfahren, Steuergerät und Computerprogrammprodukt zum Bestimmen einer Kopforientierung und/oder -position eines Fahrzeuginsassen. Ferner bezieht sich die Erfindung auf ein Innenraumüberwachungssystem eines Fahrzeuges mit einem erfindungsgemäßen Steuergerät. Außerdem bezieht sich die Erfindung auf einen computerlesbaren Datenträger, auf dem das erfindungsgemäße Computerprogrammprodukt gespeichert ist.

Vorrichtungen zur Steuerung von Sicherheitssystemen in einem Kraftfahrzeug sind bekannt. Beispielsweise offenbart die DE 19932520A1 Vorrichtung zur Steuerung wenigstens eines Sicherheitssystems in einem Kraftfahrzeug in Abhängigkeit von Ausgangssignalen von Sensoren zur Erfassung der Position von Objekten und/oder Personen auf einem Sitz des Kraftfahrzeugs, wobei als Sensoren wenigstens zwei auf einen Sitz gerichtete Kameras vorgesehen sind, wobei in einer Auswerteeinheit aus den in den Kameras registrierten zweidimensionalen Bildern eine dreidimensionale Abbildung der Objekte und/oder Personen gewonnen wird, aus welcher die Ausgangssignale abgeleitet sind, wobei über die Auswerteeinheit als Ausgangssignal die Größe und/oder Form eines Kopfes einer auf dem Sitz befindlichen Person ausgebbar ist.

Bei der Detektion via Kamerasysteme ist es möglich, von einem Kopf die Position und die Orientierung zu bestimmen. Eine hohe Genauigkeit für alle Kopf-Posen zu erreichen ist ein großes Problem.

Hier setzt die Erfindung an. Der Erfindung hat die Aufgabe zugrunde gelegen, Kopfpositionsdaten zu optimieren.

Die Erfindung und Ausführungsbeispiele der Erfindung werden in der Beschreibung und in den Figuren erläutert.

Das erfindungsgemäße Verfahren dient der Bestimmung einer Kopforientierung und/oder -position eines Fahrzeuginsassen. Das Verfahren löst die Aufgabe dadurch, dass zunächst ein erster Erfassungsbereich für Kopforientierungen und/oder - positionen eines ersten in einem Innenraum des Fahrzeuges angeordneten bildgebenden Sensors in Abhängigkeit von verschiedenen Kopforientierungen und/oder - positionen relativ zu der Anordnung des ersten Sensors bestimmt wird. Ferner wird zunächst ein zweiter Erfassungsbereich für Kopforientierungen und/oder -positionen wenigstens eines zweiten in dem Innenraum des Fahrzeuges angeordneten bildgebenden Sensors in Abhängigkeit von verschiedenen Kopforientierungen und/oder - positionen relativ zu der Anordnung des zweiten Sensors bestimmt. In Abhängigkeit der Kopforientierung und/oder -position des Fahrzeuginsassen wird die Kopforientierung und/oder -position mit demjenigen Sensor, in dessen Erfassungsbereich die Kopforientierung und/oder -position besser bestimmbar ist als in einem Erfassungsbereich eines anderen Sensors.

Durch das Verwenden von mehreren bildgebenden Sensoren werden aufgrund der Position der Sensoren in dem Innenraum unterschiedliche Genauigkeiten für unterschiedliche Kopf-Posen erhalten. Erfindungsgemäß werden mittels der ersten beiden Verfahrensschritte die Genauigkeiten von beiden Sensoren zuvor vermessen. Beispielsweise ist der erste bildgebende Sensor hinter einem Lenkrad an einer Windschutzscheibe des Fahrzeuges angeordnet. Der zweite bildgebende Sensor ist beispielsweise rechts von dem Fahrzeuginsassen an dem Fahrzeughimmel angeordnet. Bei Blick des Fahrzeuginsassen in Richtung Lenkrad besitzt der erste bildgebende Sensor eine Genauigkeit von +/- 0,5 cm pro +/- 1°. Der zweite bildgebende Sensor besitzt in diesem Fall eine Genauigkeit von lediglich 1,0 cm pro +/- 1°. Bei Blick des Fahrzeuginsassen nach rechts oben besitzt der erste bildgebende Sensor eine Genauigkeit von +/- 3,5 cm pro +/- 10°. Der zweite bildgebende Sensor besitzt in diesem Fall eine höhere Genauigkeit von 0,5 cm pro +/- 1°. Die Genauigkeiten werden beispielsweise zuvor durch Tests ermittelt, wobei Kopforientierung und/oder -position mit einem Messsystem vermessen werden. Im aktiven Einsatz werden dann nur die Daten der Sensoren verwendet, in deren jeweiligen Erfassungsbereichen die höchste Genauigkeit für Bestimmen der Kopforientierung und/oder -position erreicht wird. Wenn die Erfassungsbereiche bekannt sind, dann kann automatisiert zu dem jeweiligen Erfassungsbereich umgeschaltet werden. Wenn sich zum Beispiel der Kopf aus einer ersten Position, in der der erste Sensor direkt in Blickrichtung des Fahrzeuginsassen montiert ist, in eine zweite Position dreht, in der die Blickrichtung auf den zweiten Sensor gerichtet ist, dann kann der zweite Sensor die Kopforientierung besser bestimmen als der erste Sensor. Der Kopf liegt im Wesentlichen zentral in dem zweiten Erfassungsbereich. Durch die erfindungsgemäße genauere Bestimmung der Kopforientierung und/oder position können sicherheitsrelevante Funktionen, die von einer genauen Kenntnis der Kopforientierung und/oder -position abhängig sind, zum Beispiel das Auslösen eines Airbags, genauer bestimmt und ausgelöst werden. Damit wird mit der Erfindung die Sicherheit beim Fahren insgesamt erhöht. Fahrzeuginsasse ist beispielsweise ein Fahrzeugführer oder ein Bei- oder Mitfahrer. Erfindungsgemäß wird also die Genauigkeit der Bestimmung der Kopforientierung und/oder - position erhöht. Mit einer genaueren Bestimmung der Kopforientierung und/oderposition können Sicherheitssysteme, insbesondere Airbags oder Gurtstraffer, wirkungsvoller angesteuert werden.

Nach einem weiteren Aspekt der Erfindung werden mehrere bildgebende Sensoren verwendet. Zum Bestimmen der Kopforientierung und/oder -position des Fahrzeuginsassen werden nur die Daten der Sensoren fusioniert, in deren jeweiligen Erfassungsbereich Kopforientierung und/oder -position genau bestimmbar ist. Damit wird eine Datenfusion optimiert und die Bestimmung der Kopforientierung und/oder - position hinsichtlich Sicherheit und Rechenkapazitäten verbessert.

Bevorzugt wird das Verfahren von einem Computer ausgeführt.

Das erfindungsgemäße Steuergerät ist für automatisierte Fahrfunktionen konfiguriert. Das Steuergerät umfasst wenigstens eine erste Schnittstelle, um Daten eines ersten und wenigstens zweiten bildgebenden Sensors zu erhalten. Ferner umfasst das Steuergerät einen Computer. Der Computer umfasst einen Speicher, in dem die Ergebnisse der beiden ersten Verfahrensschritte des erfindungsgemäßen Verfahrens bereits gespeichert sind. Der Computer ist konfiguriert, den letzten Verfahrensschritt des erfindungsgemäßen Verfahrens, auch mit mehreren Sensoren und einer Datenfusion, auszuführen, um in Abhängigkeit einer bestimmten Kopforientierung und/oder -position eines Fahrzeuginsassen ein Signal zu bestimmen. Außerdem umfasst das Steuergerät eine zweite Schnittstelle, um das Signal auszugeben.

Ein Steuergerät bereitet die Daten von Sensoren als Eingangssignale auf, verarbeitet diese mittels eines Computers, beispielsweiser einer Computerplattform, und stellt Logik- und/oder Leistungspegel als Regel- oder Steuersignale bereit. Das bestimmte Signal ist ein Regel- oder Steuersignal. Mit dem bestimmten Signal werden über die zweite Schnittstelle Fahrzeugaktuatoren, insbesondere Aktuatoren für Längs- und/oder Quersteuerung und/oder Sicherheitssysteme, geregelt und gesteuert, um einen automatisierten oder autonomen Fahrbetrieb zu ermöglichen. Das Steuergerät ist signaltechnisch mit den Sensoren über die erste Schnittstelle verbunden. Die erste Schnittstelle kann ein Bauteil sein oder mehrere Bauteile, ein Bauteil pro Sensor, umfassen. Der Datenaustausch erfolgt kabelgebunden oder kabellos, zum Beispiel über Funktechnologie. Das Steuergerät ist in ein Bordnetz des Straßenfahrzeuges integriert. Das Steuergerät ist insbesondere ein elektronisches Steuergerät für automatisierte Fahrfunktionen, im Englischen Domain ECU, insbesondere ADAS/AD Domain ECU, genannt.

Der Computer des Steuergeräts ist beispielsweise als ein System-on-a-Chip realisiert mit modularem Hardwarekonzept, das heißt alle oder zumindest ein großer Teil der Funktionen sind auf einem Chip integriert und können modular erweitert werden. Der Chip ist in ein Steuergerät integrierbar. Der Computer umfasst beispielsweise einen Mehrkernprozessor und Speichermodule. Der Mehrkernprozessor ist für einen Signal/Datenaustausch mit den Speichermodulen konfiguriert. Beispielsweise umfasst der Mehrkernprozessor ein Bussystem. Die Speichermodule bilden den Arbeitsspeicher. Die Speichermodule sind beispielsweise RAM, DRAM SDRAM oder SRAM. Bei einem Mehrkernprozessor sind mehrere Kerne auf einem einzigen Chip, das heißt einem Halbleiterbauelement, angeordnet sind. Mehrkernprozessoren erreichen eine höhere Rechenleistung und sind kostengünstiger in einem Chip zu implementieren im Vergleich zu Mehrprozessorsystemen, bei denen jeder einzelne Kern in einem Prozessorsockel angeordnet ist und die einzelnen Prozessorsockel auf einer Hauptplatine angeordnet sind. Der Computer umfasst vorzugsweise wenigstens einen zentralen Verarbeitungsprozessor, im Englischen als Central Processing Unit, abgekürzt CPU, bezeichnet. Der Computer umfasst auch wenigstens einen Grafikprozessor, im Englischen als Graphic Processing Unit, abgekürzt GPU, bezeichnet. Grafikprozessoren besitzen eine spezielle Mikroarchitektur zum parallelen Prozessieren von Abläufen. Insbesondere umfasst ein Grafikprozessor wenigstens eine Prozesseinheit, die speziell zum Ausführen von Tensor-und/oder Matrixmultiplikationen ausgeführt ist. Tensor- und/oder Matrixmultiplikationen sind die zentralen Rechenoperationen für das Deep Learning. Der Computer umfasst vorzugsweise auch Hardware Beschleuniger für künstliche Intelligenz, insbesondere sogenannte Deep Learning Accelerators. Ferner ist der Computer oder das Steuergerät konfiguriert, modular mit mehreren, vorzugsweise mindestens vier, derartiger Chips erweitert zu werden. Damit ist der Computer insgesamt für maschinelles Lernen optimiert und skalierbar, das heißt der Computer kann für verschiedene SAE J3016 Stufen angepasst werden.

In einer bevorzugten Weiterbildung der Erfindung ist der Computer konfiguriert, eine Konfidenz für die Daten der bildgebenden Sensoren zu bestimmen. Dies bedeutet, dass der Computer angibt, wie vertrauensvoll die Daten der bildgebenden Sensoren sind, das heißt, wie sicher sich der Computer bei der Erkennung von Objekten ist. Ist zum Beispiel ein bildgebender Sensor abgedeckt, dann bestimmt der Computer für diesen Sensor die Konfidenz = 0. In diesem Fall werden die Daten eines weiteren bildgebenden Sensors verwendet. Wenn zum Beispiel der Fahrzeuginsasse nach rechts blickt, dann besitzt beispielsweise eine Kamera, die hinter einem Lenkrad angeordnet ist, eine Konfidenz von 50% und eine Kamera, die beispielsweise in Blickrichtung des Fahrzeuginsassen angeordnet ist, eine Konfidenz von 100%. Damit ist sichergestellt, dass nur diejenigen bildgebenden Sensoren für die Objekterkennung verwendet werden, die die besten Daten, das heißt die Daten mit der größten Konfidenz, liefern. Liefern zwei bildgebende Sensoren Daten mit gleicher Konfidenz, können diese Daten fusioniert werden.

Das erfindungsgemäße Innenraumüberwachungssystem eines Fahrzeuges umfasst einen ersten und wenigstens einen zweiten bildgebenden Sensor. Ferner umfasst das Innenraumüberwachungssystem ein erfindungsgemäßes Steuergerät. Zwischen den Sensoren und dem Steuergerät erfolgt ein Datenaustausch.

Ein Innenraumüberwachungssystem ist ein Sensorsystem zur Lokalisation und/oder Klassifikation, vorzugsweise dreidimensionalen Erkennung, von Fahrzeuginsassen. Das Innenraumüberwachungssystem liefert insbesondere Daten für sicherheitsrelevante Aspekte, zum Beispiel mit welcher Kraft Airbags und/oder Gurtstraffer ausgelöst werden sollen in Abhängigkeit einer Position eines Fahrzeuginsassen oder Innenraumtemperaturen. Das Innenraumüberwachungssystem bestimmt auch den Einsatz weiterer adaptiver Sicherheitsfunktionen. Mit dem erfindungsgemäßen Steuergerät kann das Innenraumüberwachungssystem Kopforientierung und/oderposition besonders genau bestimmen. Damit kann das Innenraumüberwachungssystem beispielsweise besonders genau bestimmen, ob ein Fahrer den Blick auf die Straße richtet, um zu entscheiden, ob der Fahrer eine Steuerung eines Fahrzeuges übernehmen kann, im Englischen take-over genannt, falls das Fahrzeug zuvor automatisiert gesteuert wurde.

Vorzugsweise ist der erste Sensor ein Sensor einer 2D-Kamera und der zweite Sensor ein Sensor einer 3D-Kamera ist, insbesondere einer Lichtlaufzeitkamera. Eine 2D-Kamera ist kostengünstig. Die 2D-Kamera ist beispielsweise eine 2D-Monokamera. Der zweite Sensor ist alternativ ein Sensor eines 2D-Stereokamerasystems. Ein 2D-Stereokamerasystem entspricht einer 3D-Kamera. Eine 3D-Kamera liefert Tiefeninformationen und verbessert damit die Bestimmung einer Kopforientierung und/oder -position. Mittels Fusion der Daten der 2D-Kamera und der 3D-Kamera wird die Bestimmung der Kopforientierung und/oder -position weiter optimiert. Mit der Lichtlaufzeitkamera, im Englischen time-of-flight (TOF) camera genannt, wird ein Tiefenbild eines Kopfes über pixelweise Messung der Lichtlaufzeit erhalten.

Das erfindungsgemäße Computerprogrammprodukt dient der Bestimmung einer Kopforientierung und/oder -position eines Fahrzeuginsassen. Das Computerprogrammprodukt umfasst Softwarecodeabschnitte. Die Softwarecodeabschnitte bewirken, dass das erfindungsgemäße Innenraumüberwachungssystem ein erfindungsgemäßes Verfahren ausführt, wenn das Computerprogramm auf einem erfindungsgemäßen Steuergerät des Innenraumüberwachungssystems läuft.

Die Softwarecodeabschnitte des Computerprogrammprodukts stellen eine Abfolge von Befehlen dar, durch die das Steuergerät bei geladenem Computerprogramm veranlasst wird, Kopforientierung und/oder -position eines Fahrzeuginsassen zu bestimmen und in Abhängigkeit dieser Bestimmung ein Signal auszugeben, insbesondere zur Steuerung sicherheitsrelevanter Fahrzeugfunktionen. Das Computerprogrammprodukt ruft damit einen technischen Effekt hervor.

Bevorzugt umfasst das Computerprogrammprodukt Softwarecodeabschnitte, die bewirken, dass das Steuergerät eine Konfidenz für die Daten von bildgebenden Sensoren des Innenraumüberwachungssystems bestimmt.

Ein weiterer Aspekt der Erfindung ist ein computerlesbarer Datenträger, auf dem das erfindungsgemäße Computerprogrammprodukt gespeichert ist. Beispielsweise lädt und führt das Steuergerät den Datenträger aus in Speichermodulen des Computers. Der Datenträger ist beispielweise ein USB-Stick, eine SD-Karte, vorteilhafterweise eine SD-Karte mit integrierter WLAN-Funktion, eine CD, DVD, oder eine BlueRay-Disc.

Ausführungsbeispiele sind in den Figuren angegeben. Es zeigen:
Fig. 1 ein erstes Ausführungsbeispiel eines erfindungsgemäßen Innenraumüberwachungssystems,
Fig. 2 ein zweites Ausführungsbeispiel des erfindungsgemäßen Innenraumüberwachungssystems und
Fig. 3 ein Ausführungsbeispiel eines erfindungsgemäßen Steuergeräts mit schematischer Darstellung des erfindungsgemäßen Verfahrens.

In den Figuren bezeichnen gleiche Bezugszeichen gleiche oder funktionsähnliche Bezugsteile. Übersichtshalber sind in den Figuren nur die jeweils relevanten Bezugsteile angegeben um Wiederholungen zu vermeiden.

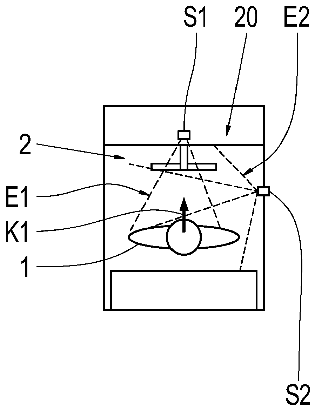

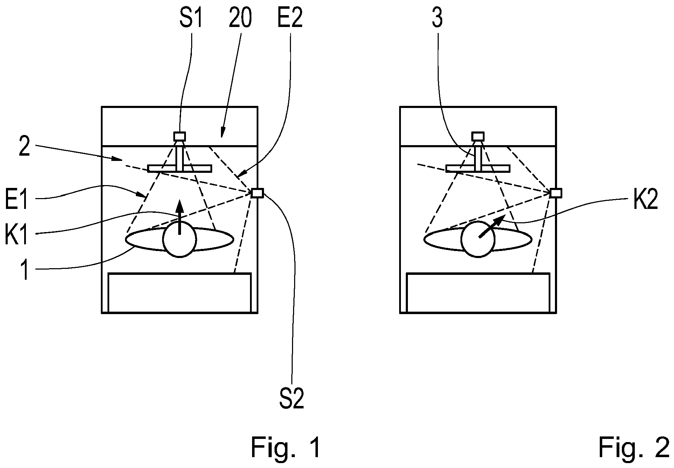

In Fig.1 und Fig. 2 ist ein Fahrzeuginsasse 1 in einem Innenraum 2 eines PKW gezeigt. Der Fahrzeuginsasse 1 ist ein Fahrer, der auf einem Fahrersitz hinter einem Lenkrad 3sitzt.

Der Innenraum 2 umfasst ein Innenraumüberwachungssystem 20. Von dem Innenraumüberwachungssystem 20 ist in Fig. 1 ein erster bildgebender Sensor S1 und ein zweiter bildgebender Sensor S2 dargestellt. Der erste bildgebende Sensor S1 ist eine 2D-Monokamera, die hinter dem Lenkrad 3 an einer Windschutzscheibe montiert ist. In einem ersten Erfassungsbereich E1 des ersten bildgebenden Sensors S1 sind erste Kopforientierungen K1 und -positionen mit Blick geradeaus besonders genau bestimmbar. Der zweite bildgebende Sensor S2 ist eine 3D-Kamera, die an einem Fahrzeughimmel rechts oberhalb des Fahrzeuginsassen montiert ist. In einem zweiten Erfassungsbereich E2 des zweiten bildgebenden Sensors S2 sind zweite Kopforientierungen K2 und -positionen mit Blick nach rechts besonders genau bestimmbar. Die Erfassungsbereiche E1 und E2 wurden bereits bestimmt in Abhängigkeit von verschiedenen Kopforientierungen und -positionen. Blickt der Fahrzeuginsasse 1 geradeaus, werden die Daten des ersten bildgebenden Sensors S1 zur Bestimmung der Kopforientierung K1 und -position verwendet. Blickt der Fahrzeuginsasse 1 nach rechts, werden die Daten des zweiten bildgebenden Sensors S2 zur Bestimmung der Kopforientierung K2 und -position verwendet. In diesem Fall wird die Kopforientierung K2 und -position mit dem zweiten bildgebenden Sensor S2 genauer bestimmt. Zeigt eine Blickrichtung des Fahrzeuginsassen 1 in den Raum zwischen dem ersten bildgebenden Sensor S1 und dem zweiten bildgebenden Sensor S2, werden die Daten beider Sensoren S1 und S2 fusioniert.

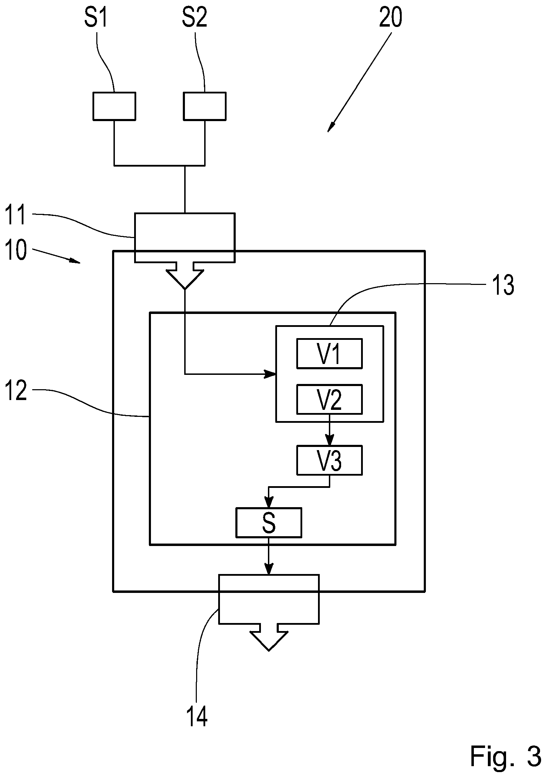

Fig. 3 zeigt ein erfindungsgemäßes Steuergerät 10 in dem Innenraumüberwachungssystem 20.

Das Steuergerät 10 umfasst eine erste Schnittstelle 11. Über die erste Schnittstelle 11 ist das Steuergerät 10 signaltechnisch mit den bildgebenden Sensoren S1 und S2 des Innenraumüberwachungssystems 20 verbunden. Daten der Sensoren S1 und S2 werden über die erste Schnittstelle 11 einem Computer 12 des Steuergeräts bereitgestellt. Der Computer 12 umfasst einen Speicher 13. Vor dem aktiven Einsatz des Innenraumüberwachungssystems 20 wurden bereits folgende Verfahrensschritte durchgeführt:
- V1: Bestimmen des ersten Erfassungsbereichs E1 für Kopforientierungen K1, K2 und/oder -positionen des ersten bildgebenden Sensors S1 in Abhängigkeit von verschiedenen Kopforientierungen K1, K2 und/oder -positionen relativ zu der Anordnung des ersten Sensors S1
   und
- V2: Bestimmen des zweiten Erfassungsbereichs E2 für Kopforientierungen K1, K2 und/oder -positionen wenigstens des zweiten bildgebenden Sensors S2 in Abhängigkeit von verschiedenen Kopforientierungen K1, K2 und/oder - positionen relativ zu der Anordnung des zweiten Sensors S2.

Die Ergebnisse der Verfahrensschritte V1 und V3 sind in dem Speicher 13 gespeichert. Der Computer 12 führt den Verfahrensschritt V3, nämlich in Abhängigkeit der Kopforientierung K1, K2 und/oder -position des Fahrzeuginsassen 1 Bestimmen der Kopforientierung K1, K2 und/oder -position mit demjenigen Sensor S1, S2, in dessen Erfassungsbereich E1, E2 die Kopforientierung K1, K2 und/oder -position besser bestimmbar ist als in einem Erfassungsbereich E1, E2 eines anderen Sensors S1, S2. Während der Ausführung des Verfahrensschritts V3 greift der Computer 12 auf die Ergebnisse gespeichert im Speicher 13 zurück. Als Ergebnis erhält der Computer 12 in Abhängigkeit der bestimmten Kopforientierung K1, K2 und/oder -position ein Signal S zur Ansteuerung von Fahrzeugaktuatoren. Das Signal S wird über eine zweite Schnittstelle 14 des Steuergeräts 10 bereitgestellt.

### Bezugszeichen

- 1: Fahrzeuginsassen
- 2: Innenraum
- 3: Lenkrad
- E1: erster Erfassungsbereich
- S1: erster bildgebender Sensor
- K1: erste Kopforientierung
- E2: zweiter Erfassungsbereich
- S2: zweiter bildgebender Sensor
- K2: zweite Kopforientierung
- 10: Steuergerät
- 11: erste Schnittstelle
- 12: Computer
- 13: Speicher
- 14: zweite Schnittstelle
- 20: Innenraumüberwachungssystem

## Patentansprüche

1. Verfahren zum Bestimmen einer Kopforientierung (K1, K2) und/oder -position eines Fahrzeuginsassen (1) umfassend die Schritte:
• Bestimmen eines ersten Erfassungsbereichs (E1) für Kopforientierungen (K1, K2) und/oder -positionen eines ersten in einem Innenraum (2) des Fahrzeuges angeordneten bildgebenden Sensors (S1) in Abhängigkeit von verschiedenen Kopforientierungen (K1, K2) und/oder -positionen relativ zu der Anordnung des ersten Sensors (S1) (V1),
• Bestimmen eines zweiten Erfassungsbereichs (E2) für Kopforientierungen (K1, K2) und/oder -positionen wenigstens eines zweiten in dem Innenraum (2) des Fahrzeuges angeordneten bildgebenden Sensors (S2) in Abhängigkeit von verschiedenen Kopforientierungen (K1, K2) und/oder -positionen relativ zu der Anordnung des zweiten Sensors (S2) (V2) und
• in Abhängigkeit der Kopforientierung (K1, K2) und/oder -position des Fahrzeuginsassen (1) Bestimmen der Kopforientierung (K1, K2) und/oder -position mit demjenigen Sensor (S1, S2), in dessen Erfassungsbereich (E1, E2) die Kopforientierung (K1, K2) und/oder -position besser bestimmbar ist als in einem Erfassungsbereich (E1, E2) eines anderen Sensors (S1, S2) (V3).

2. Verfahren nach Anspruch 1 mit mehreren bildgebenden Sensoren (S1, S2), wobei zum Bestimmen der Kopforientierung (K1, K2) und/oder -position des Fahrzeuginsassen (1) nur die Daten der Sensoren (S1, S2), in deren jeweiligen Erfassungsbereich (E1, E2) Kopforientierung (K1, K2) und/oder -position genau bestimmbar ist, fusioniert werden.

3. Verfahren nach Anspruch 1 oder 2, wobei das Verfahren von einem Computer ausgeführt wird.

4. Steuergerät (10) für automatisierte Fahrfunktionen umfassend
• wenigstens eine erste Schnittstelle (11), um Daten eines ersten und wenigstens zweiten bildgebenden Sensors (S1, S2) zu erhalten,
• einen Computer (12) umfassend einen Speicher (13), in dem die Ergebnisse der Verfahrensschritte V1 und V2 des Verfahrens nach Anspruch 1 bereits gespeichert sind, wobei der Computer konfiguriert ist, den Verfahrensschritt V3 des Verfahrens Anspruch 1 oder das Verfahren nach Anspruch 2 auszuführen, um in Abhängigkeit einer bestimmten Kopforientierung (K1, K2) und/oder -position eines Fahrzeuginsassen (1) ein Signal (S) zu bestimmen, und
• eine zweite Schnittstelle (14), um das Signal auszugeben.

5. Steuergerät (10) nach Anspruch 4, wobei der Computer (12) konfiguriert ist, eine Konfidenz für die Daten der bildgebenden Sensoren (S1, S2) zu bestimmen.

6. Innenraumüberwachungssystem (20) eines Fahrzeuges umfassend einen ersten und wenigstens einen zweiten bildgebenden Sensor (S1, S2) und ein Steuergerät (10) nach Anspruch 4 oder 5, wobei zwischen den Sensoren (S1, S2) und dem Steuergerät ein Datenaustausch erfolgt.

7. Innenraumüberwachungssystem (20) nach Anspruch 6, wobei der erste Sensor (S1) ein Sensor einer 2D-Kamera und der zweite Sensor (S2) ein Sensor einer 3D-Kamera ist.

8. Computerprogrammprodukt zum Bestimmen einer Kopforientierung (K1, K2) und/oder -position eines Fahrzeuginsassen (1) umfassend Softwarecodeabschnitte, die bewirken, dass das Innenraumüberwachungssystem (20) nach Anspruch 6 oder 7 ein Verfahren nach einem der Ansprüche 1 bis 3 ausführt, wenn das Computerprogramm auf einem Steuergerät (10) nach Anspruch 4 oder 5 des Innenraumüberwachungssystems (20) läuft.

9. Computerprogrammprodukt nach Anspruch 8 umfassend Softwarecodeabschnitte, die bewirken, dass das Steuergerät (10) eine Konfidenz für die Daten von bildgebenden Sensoren (S1, S2) des Innenraumüberwachungssystems (20) bestimmt.

10. Computerlesbarer Datenträger, auf dem das Computerprogrammprodukt nach Anspruch 8 oder 9 gespeichert ist.
